# EUROPEAN PATENT SPECIFICATION

(11) **EP 3 539 299 B1**
(45) Date of publication and mention of the grant of the patent: **01.09.2021**
(21) Application number: 17804959.9
(22) Date of filing: 07.11.2017
(51) Int. Cl.: H04R 1/08, F16M 11/20, F16M 11/10, F16M 11/28, F16M 13/02

(54) **STAND FOR MICROPHONES, LAMPS AND THE LIKE**
STÄNDER FÜR MIKROFONE, LAMPEN UND DERGLEICHEN
SUPPORT POUR MICROPHONES, LAMPES ET SIMILAIRES

(30) Priority: 10.11.2016 IT 201600113481
(43) Date of publication of application: 18.09.2019
(73) Proprietor: Mektor Srl, 20063 Cernusco Sul Naviglio (MI) (IT)
(72) Inventor: ROTUNDO, Francis Marcian, 20063 Cernusco sul Naviglio (MI) (IT)
(74) Representative: Ferroni, Filippo
(86) International application number: PCT/IB2017/056946
(87) International publication number: WO 2018/087657

(56) References cited:
- WO-A1-2004/033803
- DE-U1-202016 105 116
- DE-U1-202016 105 116
- US-A- 3 428 286
- US-A- 6 042 080
- US-B1- 9 388 934

## Description

From a general viewpoint, the present invention relates to a stand for supporting devices such as microphones, lamps or the like.

Before proceeding any further, it is worth pointing out that in the following description and in the appended claims reference will mostly be made, for simplicity and clarity, to a novel stand intended for supporting microphones (microphone stand), since this is the preferred embodiment of the invention. However, this should not be understood as a limitation excluding any other possible application of the stand, such as a stand for supporting bookrests, lamps, cameras, video cameras or even mobile telephone terminals (e.g. cellular phones, also known as smartphones, electronic tablets), since the latter are often used for taking photographs or shooting videos.

With this introductory statement in mind, one can say, therefore, that the known stands considered herein, particularly microphone stands, generally consists of telescopic and/or swivelling shafts or tubes resting on the floor through a base, such as a tripod or the like.

Examples of such stands are apparent from the following patent applications. US 6 042 080 A relates to a stand which comprises a magnetic base for secure anchoring to a ferromagnetic surface such as the hood, trunk, fender, or a metallic base. US 9 388 934 B1 relates to a support having a frangible magnetic assembly for use in attaching a post, stanchion, pole, or the like, to a fixed base. WO 2004/033803 A1 relates to a compact and robust stand assembly that can support an electronic device and provide one or more degrees of freedom of motion to the electronic device having a magnetic base. US 3 428 286 A relates to an article holder that includes a socket member interconnected to a base. In one embodiment a magnet is integrated in the base. DE 20 2016 105116 U1 relates to a microphone stand for arrangement of microphones for stereo recording system, having a resilient ring element whose diameter is reduced due to movement of closure portion relative to retainer, to lock support arm at retainer.

The length of the microphone stands can be adjusted, e.g. in accordance with the height of a user or for adapting them to the context in which they have to be used (on stage or in a recording studio for musical instruments), by means of ferrules, articulated joints, pivots and other similar mechanisms, which allow locking the telescopic shafts in the desired condition.

Reference should be made on this matter to the prior art, which can be easily understood even by unskilled people; in fact, many people have seen musicians, singers or other artists (even only on TV) who, as soon as they arrive on stage, adjust the microphone stands to suit themselves.

One important aspect concerning the microphone stands taken into account herein is their stability and ease of handling.

In fact, it can be easily guessed that the stands, once they have been adjusted to suit the person or instrument that will have to use the supported microphone, must be able to remain stably in the adjusted condition, so as to avoid requiring any further adjustment.

This implies, therefore, that the stands must have a stable and secure configuration, not only as concerns the linkages and/or the coupling of the telescopic shafts or tubes, but also as concerns their position on the floor.

In fact, microphone stands are usually positioned on the floor in an upright condition, and are for this purpose fitted with a tripod base that offers stability without adding too much weight to the structure.

It is therefore necessary that microphone stands are easy to handle, so that they can be easily moved and adjusted as necessary.

Let us think of, for example, artists or singers performing on stage, who often grasp the microphone and its stem and move or make acrobatic feats during their performance, at the end of which they have to put the microphone stand back on the floor without it falling or remaining out of balance.

It follows that the stand base must be large to ensure good stability, without however being too heavy, because the stand as a whole would otherwise become difficult to handle.

A tripod is a good compromise between these two stability and handling requirements, and it is for this reason that it has now become the standard solution for all microphone stands and other types of stand as well. Nevertheless, some structural and functional aspects of the above-described known microphone stands can still be modified or improved.

For example, one of them is related to stability, since a tripod can be enlarged only to a certain extent for obvious reasons, and sometimes it may not meet particular requirements.

This is the case, for example, of the so-called "boom" stands, i.e. stands equipped with an arm extending transversally to the vertical stem and swivelling relative to the latter; the boom inevitably impairs the stability of the microphone stand, and a long boom may pose a problem that cannot be solved by excessively enlarging the tripod.

Furthermore, when one needs to put the microphone stand down, the tripod base is not very practical because it requires the user to pay attention to avoid that it might fall down, due to the intrinsic limits of the three support points.

It is worth pointing out that similar problems also affect, *mutatis mutandis,* stands intended for bookrests, lamps or other devices, as mentioned above.

In light of this analysis of the state of the art, it can therefore be said that the technical problem at the basis of the invention is to provide a stand for supporting microphones or similar devices, the structural and operational characteristics of which can overcome the limitations of prior-art stands. The idea that solves this problem is to provide a stand that can be easily applied onto, and removed from, a base that can remain stationary: in this manner, it will no longer be necessary to move the base, thus eliminating all of the above-described difficulties posed by tripod-type microphone stands. In accordance with a preferred embodiment of the invention, the stand is associated with the base by means of a magnetic coupling: it can therefore be applied onto, or removed from, the base simply and rapidly, without needing any mechanical couplings or fastening means that would require complex assembly operations or that would anyway make the stand difficult to handle.

The features of the invention are specifically set out in the claims appended to this description.

Such features, as well as the effect and advantages achieved by the invention, will become more apparent in the light of the following description of a preferred but non-limiting example of embodiment thereof, in which reference will be made to the annexed explanatory and non-limiting drawings, wherein:

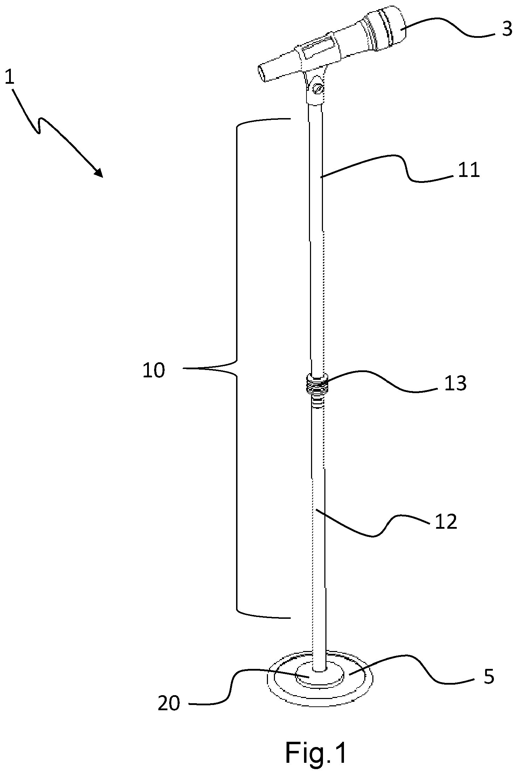

- Fig. 1 shows a general view of a stand according to the invention, which is shown supporting a microphone;

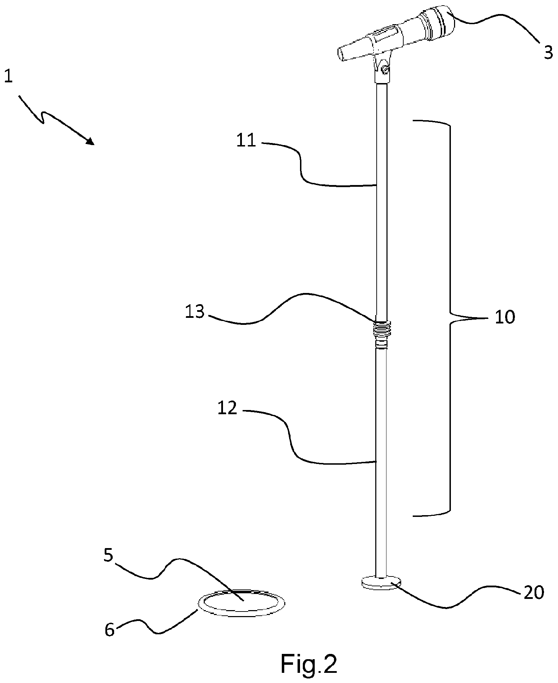

- Fig. 2 is a view of the stand of Fig. 1 and its support base, in a detached condition;

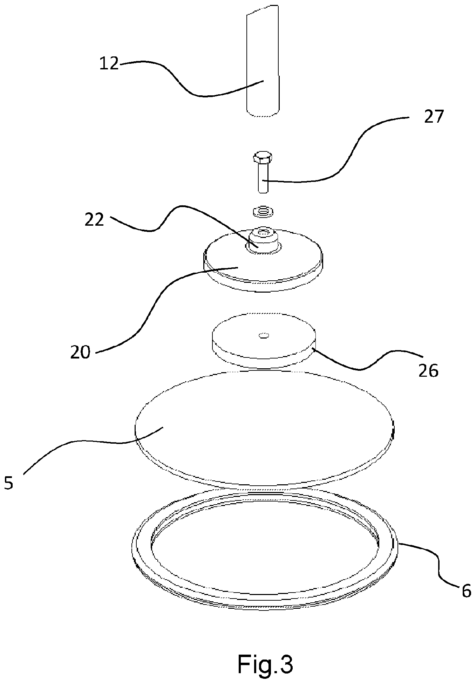

- Fig. 3 is an exploded view of some components of the support base and of the foot of the preceding stand;

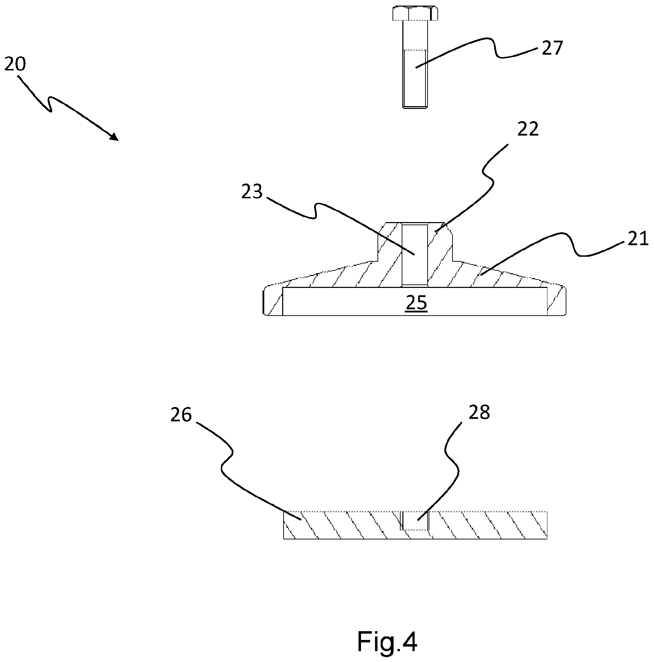

- Fig. 4 is an exploded sectional view of some components of the foot of the stand of the preceding figures;

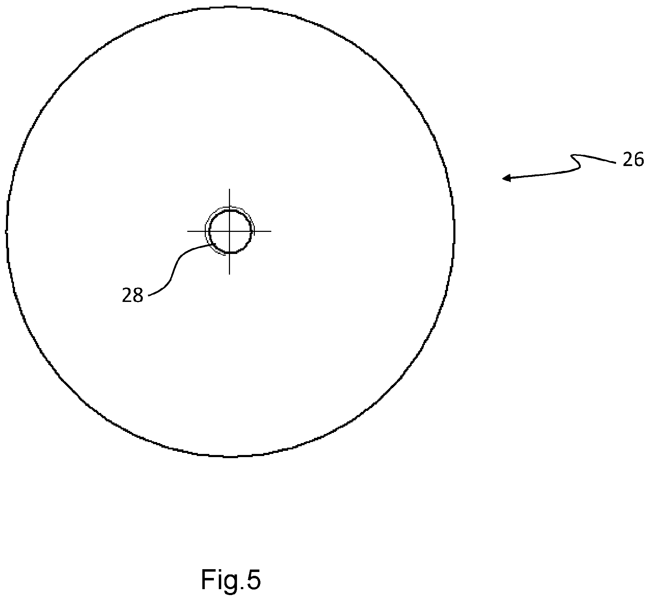

- Fig. 5 shows a magnetic disk of the foot of Figs. 3 and 4;

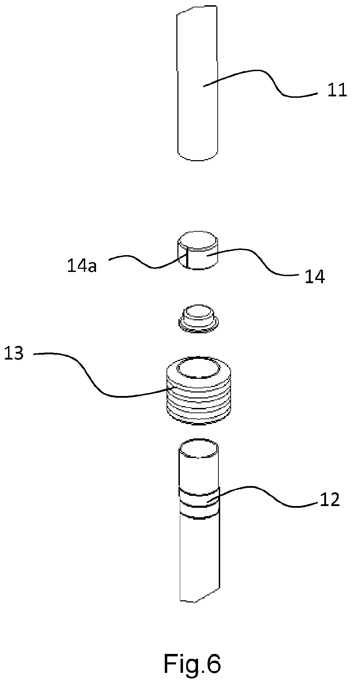

- Fig. 6 shows a detail of the telescopic connection of the shafts of the preceding stand;
- Fig. 7 shows a "boom" variant of the stand of the preceding figures;
- Fig. 8 is an exploded view of a detail of the stand of Fig. 6.

With reference to the above-listed figures, reference numeral 1 designates as a whole a stand in accordance with the invention, at the top end of which a microphone 2 is installed.

In the drawings, the latter is shown inserted in a seat 3 fastened to the top end of the stand, from which it can be removed to be then held and used in a *per se* known manner.

The stand 1 comprises a base or platform 5 to be laid on the ground, from which an upper portion or stem 10 extends upwards, which preferably consists of, in this case, the shafts 11, 12 telescopically coupled to each other, so that the length of the stand 1 can be adjusted.

For this purpose, this embodiment uses a tightening ferrule 13 associated with the lower shaft 12, which can be screwed or unscrewed to prevent or allow the mutual sliding of the shafts 11, 12; the ferrule acts upon a bushing 14 coupled to the upper shaft 11, which is elastic and can expand or contract radially due to the presence of a longitudinal slit 14a.

When the ferrule 13 is screwed or unscrewed, it contracts or expands the elastic bushing 14 radially, thereby locking or releasing the upper shaft 11 relative to the lower shaft 12 of the stand 1.

Of course, other mechanisms can also be used for locking the telescopic shafts 11, 12 as a replacement for the one considered herein, since this is a secondary mechanical aspect of the microphone stand 1.

Before proceeding any further, it is appropriate to point out that, in this description, any reference to "an embodiment" will indicate that a particular configuration, structure or feature is comprised in at least one embodiment of the invention. Therefore, the terms "embodiment", "implementation" and the like, which may be present in different parts of this text, will not necessarily be all related to the same implementation solution.

Furthermore, any particular configuration, structure or feature may be combined in one or more variants in any way deemed appropriate. The references below are therefore used only for simplicity's sake and do not limit the protection scope or extent of the invention.

The upper portion or stem 10 of the stand 1 further comprises a foot 20 to be applied onto the base 5; the foot 20 has a flattened body 21, which in the example shown in the drawings is essentially a truncated cone surmounted by a collar 22 extending upwards in a cantilever fashion and axially crossed by a hole 23, the length of which reaches a cavity 25 in the foot 20.

The cavity 20 is intended to house a magnet 26 having a conjugated shape; in this case, both the cavity 25 and the magnet 26 are shaped like a circular disk. Although this is a preferred solution, these elements may nonetheless have a different configuration, with a quadrilateral or polygonal, as opposed to circular, geometry.

The foot 20, the cavity 25 and the magnet 26 may have variable dimensions according to the case, depending on different factors such as the height and weight of the stand 1, the type of application it is intended for, e.g. the object that needs to be supported (microphone, bookrest, lamp, etc.), and so on.

However, the foot 20 has an outer dimension ranging between 50 and 80 mm, while the cavity 25 and the magnet 26 have dimensions ranging between 60 and 70 mm; in the circular geometry case shown in the drawings, such dimensions refer to the diameters of the foot 20, cavity 25 and magnet 26.

The latter is preferably entirely or mostly made of ferromagnetic material, such as, preferably, ferrite, silicon steel or the like, and is secured into the cavity 25 by means of a threaded connection; in particular, in this case a screw 27 is used, which extends along the through hole 23 in the collar 22 and engages a threaded hole 28 in the magnet 26.

This solution using a disk-shaped magnet 26 offers the advantage that it is simple and therefore not very costly. However, it is not the only feasible one. For example, it is also possible to use rare-earth permanent magnets based on neodymium, iron and boron (Nd-Fe-B), samarium-cobalt, etc., incorporated into an appropriate matrix that confers the desired overall effect on the magnet 26.

Most importantly, this effect is anchoring the foot 20 magnetically to the ferrous base 5, but it preferably also includes providing a balancing weight for the stand. In fact, the weight of the magnet 26 is preferably similar to that of the stem 10 of the stand, so that the centre of gravity of the latter, including the foot 20, will be sufficiently low to ensure good stability when the stand is anchored to the base 5.

In the embodiment of the invention shown in the drawings, the base 5 is configured essentially as a flat plate circular in shape and larger than the foot 20; furthermore, as previously stated in regard to the foot and the magnet, the size of the base 5 is dependent on the height and weight of the stand 1, the shape of the stand (with or without a boom), the object to be supported, etc.

Nevertheless, the base 5 preferably has a diameter of 280-300 mm and a thickness that may range from a few millimetres to a few centimetres; the base 5 is made of ferrous material, so that it weighs a few kilograms (preferably 4 to 8 kg).

In addition, as shown in the drawings, the edge of the base 5 may advantageously be associated with a rubber gasket or crown 6, the function of which is to protect the base against possible shocks and to prevent injuries to people in the event of contact with the edge of the metallic base 5. Furthermore, the gasket 6, being made of rubber, ensures that the base 5 will rest securely on the ground without skidding or crawling; to this end, the base 5 can be equipped, as in this case, with a hole 7 for a screw or a pin, through which it can be fastened to the floor.

This will prevent the base 5 from rising when the stand 1 is detached from it by overcoming the magnetic coupling force between the foot 20, fitted with the magnet 26, and the base 5.

In accordance with a preferred embodiment of the invention, the foot 20 is secured to the stem 10 of the stand 1 by means of a shape coupling, i.e. without requiring any additional fastening means, such as screws, dowel pins, welds or the like.

For this purpose, the lower shaft 12 of the stem 10 is coupled by interference to the collar 22; in this respect, it should be noted that the latter has, for this very reason, an appropriate height, which is at least partly dependent on the diameter of the shaft 12, the degree of interference required for the coupling between the collar 22 and the shaft 12 (i.e. the mechanical tolerances of the shaft-hole coupling), the materials the various components are made of, and so on.

Preferably, the collar 22 is essentially as tall as the rest of the foot 20; more preferably, its height is equal to or greater than that of the cavity 25 for the magnet 26; this will ensure, in fact, good balance and stability of the mechanical coupling between the collar 22 and the shaft 12, and of the magnetic coupling between the foot 20 and the support base 5.

In this context, it must be underlined that, quite unexpectedly, the Applicant has verified that, all conditions being equal, i.e. the dimensions of the stand 1 and its stem 10 being the same, the reduced height of the foot 20 ensures a more stable connection between the stand 1 and the base 5.

In this context, also the magnet 26 is particularly important, in that it not only provides the magnetic coupling between the foot 20 and the support base 5, but also contributes with its own weight to stabilize the stand 1, since it lowers the centre of gravity thereof.

In fact, a magnet 26 sized as mentioned above may weigh 1-2 kg, and if the stand 1 is made of light material, such as aluminium or alloys thereof, the total weight of the base 5 and foot 20 including the magnet 26 will ensure stable support of the upright stand 1 on the floor.

The stand 1 will nevertheless be easy to handle, because when it is removed from the base 5 by overcoming the magnetic force attracting it against the foot 20, it will lose the weight of the base 5.

Moreover, the foot is small compared with a tripod of normal microphone stands; therefore, an important advantage is attained under this aspect as well.

Finally, in accordance with the preferred embodiment of the invention, the stand 1 is made of light materials, particularly metallic materials such as aluminium or magnesium and/or alloys thereof; this applies to those parts which are not involved in the magnetic coupling, i.e. other than the support base 5, which is ferrous or anyway ferromagnetic.

This is an important difference, because current microphone stands are generally made of steel, whether stainless steel or coated or plated standard steel, and are therefore very heavy.

One advantageous effect of the stand of the invention is that it can also be used in a suspended condition; in fact, the magnetic foot 20 can be applied to any metallic element, not only to the support base 5, i.e. beams, transoms, ceiling or any part made of metallic material suitable for magnetically coupling to the foot 20 and the magnet 26.

In particular, aluminium is the preferred material for the present invention, because the Applicant has surprisingly verified that, when subjected to an anodizing treatment, in addition to being protected against external agents (humidity, oxidation, scratches) and corrosion, it can also be advantageously finished in various colours at attractive industrial costs.

This also allows for product differentiation, thus broadening the range of surface finishes available on the market.

In the light of the above description it can be easily understood that the stand 1 according to the invention solves the previously mentioned technical problem at the basis thereof.

In fact, in the idle or vertical condition the stand 1 is kept upright and anchored to the base 5 by the foot 20 resting thereon with the magnet 26 secured in the cavity 25.

The stand can nevertheless be easily removed by levering on it, i.e. by applying a force at the top, i.e. near the microphone 3, so as to tilt it relative to the vertical and overcome the magnetic attraction force between the foot 20 and the metallic base 5; this detachment action may be further enhanced by a person using the microphone 3 by pressing the base 5 against the floor with a foot.

Once removed from the base 5, the stand 1 is easier to handle than any other known microphone stand: in fact, the foot 20 is smaller than a normal tripod, since the projecting spokes or arms of the latter take up room and may be potentially dangerous if the stand is turned over or raised at eye level (which is not uncommon during some modern artists' concerts).

The use of light materials, such as aluminium, further improves the handling of the stand.

Of course, the invention may be subject to a number of variations with respect to the description provided so far.

In this respect, it must be pointed out that the stem 10, which in the previous case illustrated in the drawings is a straight, telescopic one, may also have a more complex configuration, e.g. articulated or associated with a transverse arm or boom.

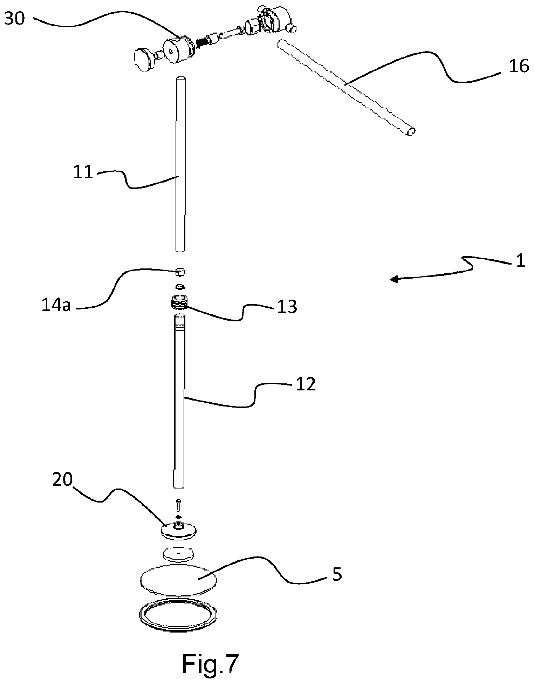

This latter option is shown in Figure 7, wherein those elements which are structurally and/or functionally equivalent to those already mentioned or described are designated by the same numerals.

As can be seen, in this case at the top end of the upper shaft 11 of the stem 10 there is not a microphone, but a linkage 30 that allows orienting an additional shaft or arm 16 relative to the vertical stem 10 of the stand 1.

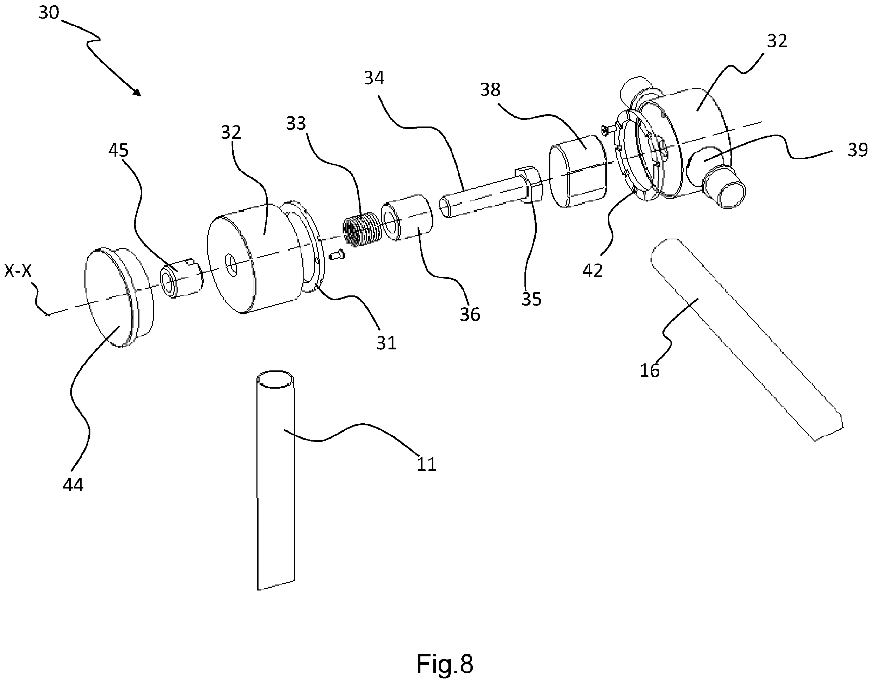

As shown more in detail in Figure 8, the linkage 30 comprises a friction mechanism for locking the arm 16 in the position chosen by the user.

For this purpose, the linkage 30 comprises two cylindrical half-bodies 31, 32 juxtaposed along an axis of rotation X-X, about which the orientation of the arm 16 is adjusted.

The half-bodies 31, 32 are internally hollow; the first one houses a countering spring 33 coupled to the stem of a tightening screw 34 having an hexagonal head 35, together with a spacer bushing 36.

The hexagonal head 35 of the screw 34 engages with a small block 38 associated with the second cylindrical half-body 32, so as to prevent the screw 34 from turning, as will be further explained below.

The first half-body 31 also has a radial aperture or hole (not shown in the drawings) for inserting the upper end of the shaft 11 of the stem of the stand; in accordance with one possible embodiment, said hole is threaded and the end of the shaft is screwed into it.

Likewise, the second half-body 32 has a pair of opposite radial holes 39 (only one of which is visible in Figure 8) for inserting the third shaft or transverse arm 16; preferably, guide bushings 40 made of plastic material, e.g. Teflon or the like, are arranged in the holes 39.

In front of the half-bodies 31 and 32, friction rings 41, 42 are fastened by means of screws or the like,
while on the outer side of the first half-body 31 a control knob or wheel 44 is applied, which couples to the end of the screw 34, preferably through a washer 45.

In the assembled condition of the linkage 30 thus formed, the two half-bodies 31, 32 are kept juxtaposed to each other by screwing the knob 44, which, being internally threaded, engages with the screw 34.

In this condition, the countering spring 33 is compressed and the friction rings 41, 42 are in contact with each other, thus holding the half-bodies in their mutual condition dependent on the orientation of the arm 16 chosen by the user.

By unscrewing the knob 44, one can separate the two half-bodies 31, 32 through the effect of the expanding countering spring 33, which pushes them away from each other, thereby releasing the friction rings 41, 42.

In this condition, therefore, it is possible to change the orientation of the arm 16 and, once the desired position is found, to screw to the knob 44 in order to lock the linkage 30 as desired.

The arm 16 of the "boom" may consist of a simple shaft like the one shown in Figures 7 and 8, or a telescopic shaft made up of two elements similar to those of the stem 10, in which case its length will be adjustable.

Other stands that are more articulated or complex than those taken into account herein may be conceived as well; this will also depend on their intended application, which is not limited to microphone stands, but may also include other equipment or devices, such as lamps, video cameras, mobile phones and the like.

## Claims

1. Stand for supporting devices such as microphones, lamps or the like, comprising a support base (5), a stem (10) extending from the base (5) and intended to support a device (3) and/or a swivelling arm (16), a foot (20) for providing a connection between the stem (10) and the base (5), wherein said connection is of the magnetic type, **characterized in that** it comprises a magnet (26) housed in the foot (20) and secured thereto via removable fastening means (27), wherein the fastening means comprise a screw (27) extending through a hole (23) in the body (21) of the foot (20) and engaging a threaded hole (28) in the magnet (26).

2. Stand according to claim 1, wherein the foot (20) is coupled to the stem (10) through a shape coupling with interference.

3. Stand according to claim 2, wherein the lower part (12) of the stem (10) has a tubular configuration and is coupled to a protruding collar (22) of the foot (20).

4. Stand according to any one of claims 1 to 3, wherein the foot (20) comprises a cavity (25) that houses a magnet (26).

5. Stand according to any one of the preceding claims, wherein the foot (20) comprises a substantially flat and/or slightly tapered body (21) crossed at least partly by a hole (23) that reaches an inner cavity (25) that houses a magnet (26).

6. Stand according to any one of the preceding claims, comprising a linkage (30) associated with the stem (10) and intended to support a swivelling arm (16), comprising two juxtaposed half-bodies (31, 32), between which friction means (41, 42) and countering elastic means (33) are arranged, respectively for stopping and releasing the half-bodies (31, 32).

7. Stand according to claim 6, comprising a knob (44) for tightening the linkage (30), which is coupled to a screw (34) that extends axially relative to the half-bodies (31, 32).

8. Stand according to claim 7, comprising means (38) for locking the half-bodies (32), associated with the axially extending screw (34).

9. Stand according to any one of the preceding claims, wherein the stem (10, 11, 12), an arm (16) linked thereto, if present, and the foot (20) are made of anodized aluminium.

## Patentansprüche

1. Ständer zum Tragen von Vorrichtungen wie Mikrofonen, Lampen oder dergleichen, umfassend eine Trägerbasis (5), einen von der Basis (5) ausgehenden Stiel (10), der vorgesehen ist, um eine Vorrichtung (3) und/oder einen Schwenkarm (16) zu tragen, einen Fuß (20) zum Bereitstellen einer Verbindung zwischen dem Stiel (10) und der Basis (5), wobei die Verbindung von einer magnetischen Art ist, **dadurch gekennzeichnet, dass** sie einen Magneten (26) aufweist, der im Fuß (20) eingehaust und an diesem über abnehmbare Befestigungsmittel (27) befestigt ist, wobei die Befestigungsmittel eine Schraube (27) umfassen, die sich durch ein Loch (23) im Körper (21) des Fußes (20) erstreckt und in ein Gewindeloch (28) im Magneten (26) eingreift.

2. Ständer nach Anspruch 1, wobei der Fuß (20) mit dem Stiel (10) durch eine Formschlusskupplung mit Übermaß gekoppelt ist.

3. Ständer nach Anspruch 2, wobei der untere Teil (12) des Stiels (10) röhrenförmig ausgebildet ist, und mit einem vorstehenden Kragen (22) des Fußes (20) gekoppelt ist.

4. Ständer nach einem der Ansprüche 1 bis 3, wobei der Fuß (20) einen Hohlraum (25) aufweist, in dem der Magnet (26) eingehaust ist.

5. Ständer nach einem der vorhergehenden Ansprüche, wobei der Fuß (20) einen im Wesentlichen flachen und/oder leicht verjüngten Körper (21) aufweist, der zumindest teilweise von einem Loch (23) durchquert wird, das einen inneren Hohlraum (25) erreicht, in dem der Magnet (26) eingehaust ist.

6. Ständer nach einem der vorhergehenden Ansprüche, umfassend ein Gestänge (30), das mit dem Stiel (10) verbunden ist, und dazu vorgesehen ist, einen schwenkbaren Arm zu halten, umfassend zwei nebeneinanderliegende Halbkörper (31, 32), zwischen denen Reibungsmittel (41, 42) und gegenwirkende, elastische Mittel (33) angeordnet sind, entsprechend zum Anhalten und Freigeben der Halbkörper (31, 32).

7. Ständer nach Anspruch 6, umfassend einen Knopf (44) zum Festziehen des Gestänges (30), der mit einer Schraube (34) gekoppelt ist, die sich axial relativ zu den Halbkörpern (31, 32) erstreckt.

8. Ständer nach Anspruch 7, umfassend Mittel (38) zum Verriegeln der Halbkörper (32), die mit der sich axial erstreckenden Schraube (34) verbunden sind.

9. Ständer nach einem der vorhergehenden Ansprüche, wobei der Stiel (10, 11, 12), ein mit ihm verbundener Arm (16), falls vorhanden, und der Fuß (20) aus eloxiertem Aluminium bestehen.

## Revendications

1. Pied pour supporter des dispositifs tels que des microphones, des lampes ou similaires, comprenant une base de support (5), une tige (10) s'étendant depuis la base (5) et destinée à supporter un dispositif (3) et/ou un bras pivotant (16), une embase (20) pour fournir un raccordement entre la tige (10) et la base (5), dans lequel ledit raccordement est du type magnétique, **caractérisé en ce qu'**il comprend un aimant (26) logé dans l'embase (20) et assujetti à celle-ci via des moyens de fixation (27) amovibles, dans lequel les moyens de fixation comprennent une vis (27) s'étendant à travers un trou (23) dans le corps (21) de l'embase (20) et engageant un trou fileté (28) dans l'aimant (26).

2. Pied selon la revendication 1, dans lequel l'embase (20) est couplée à la tige (10) par un couplage de forme avec serrage.

3. Pied selon la revendication 2, dans lequel la partie inférieure (12) de la tige (10) a une configuration tubulaire et est couplée à un collier (22) saillant de l'embase (20).

4. Pied selon l'une quelconque des revendications 1 à 3, dans lequel l'embase (20) comprend une cavité (25) qui loge un aimant (26).

5. Pied selon l'une quelconque des revendications précédentes, dans lequel l'embase (20) comprend un corps (21) sensiblement plat et/ou légèrement effilé que croise au moins en partie un trou (23) atteignant une cavité interne (25) qui loge un aimant (26).

6. Pied selon l'une quelconque des revendications précédentes, comprenant une tringlerie (30) associée à la tige (10) et destinée à supporter un bras pivotant (16), comprenant deux demi-corps (31, 32) juxtaposés, entre lesquels des moyens de frottement (41, 42) et des moyens élastiques antagonistes (33) sont agencés, respectivement pour arrêter et relâcher les demi-corps (31, 32).

7. Pied selon la revendication 6, comprenant un bouton (44) pour serrer la tringlerie (30), qui est couplé à une vis (34) qui s'étend axialement par rapport aux demi-corps (31, 32).

8. Pied selon la revendication 7, comprenant des moyens (38) pour verrouiller les demi-corps (32), associés à la vis (34) s'étendant axialement.

9. Pied selon l'une quelconque des revendications précédentes, dans lequel la tige (10, 11, 12), un bras (16) lié à celle-ci, le cas échéant, et l'embase (20) sont constitués d'aluminium anodisé.
